(19) Europäisches Patentamt
European Patent Office
Office européen des brevets

(11) Numéro de publication: **0 006 632**
**B1**

(12) **FASCICULE DE BREVET EUROPEEN**

(45) Date de publication du fascicule du brevet: **05.05.82**

(21) Numéro de dépôt: **79102193.4**

(22) Date de dépôt: **29.06.79**

(51) Int. Cl.³: **C 04 B 7/14**, C 04 B 11/12, C 04 B 13/14

(54) **Procédé de fabrication de liant hydraulique.**

(30) Priorité: **30.06.78 BE 188971**

(43) Date de publication de la demande:
**09.01.80 Bulletin 80/1**

(45) Mention de la délivrance du brevet:
**05.05.82 Bulletin 82/18**

(84) Etats contractants désignés:
**BE DE FR GB LU NL**

(56) Documents cités:
**DE - A - 2 611 889**
**DE - B - 2 040 484**
**DE - C - 878 621**
**FR - A - 2 191 550**
**FR - A - 2 203 786**
**FR - A - 2 355 785**

(73) Titulaire: **CIMENTERIES C.B.R. CEMENTBEDRIJVEN**
**Chaussée de la Hulpe, 185**
**B-1170 Bruxelles (BE)**

(72) Inventeur: **Daube, Jean**
**55, Square François Riga**
**B-1030 Bruxelles (BE)**
Inventeur: **Harvengt, Léon**
**14, Plasstraat**
**B-1860 Meise (BE)**

(74) Mandataire: **Pirson, Jean et al,**
**c/o Bureau Gevers, S.A. rue de Livourne, 7 bte 1**
**B-1050 Brussels (BE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**EP 0 006 632 B1**

Courier Press, Leamington Spa, England.

Procédé de fabrication de liant hydraulique

La présente invention a pour objet un procédé de fabrication de liants hydrauliques à partir de scories d'aciéries à l'oxygène, par activation de ces scories par du sulfate de calcium anhydre ou hydraté.

Parmi les scories d'aciéries à l'oxygène utilisées pour la mise en oeuvre de ce procédé figurent la scorie "LD" qui est un sous-produit de l'affinage des fontes suivant le procédé à l'oxygène LINZ-DONAWITZ, qui connaît un grand développement depuis une vingtaine d'années, et la scorie "LD AC" qui est le sous-produit de l'affinage des fontes suivant le procédé appelé LINZ-DONAWITZ-ARBED-CENTRE DE RECHERCHES METALURGIQUES qui permet le traitement des minerais phosphoreux et qui constitue une variante du procédé LINZ-DONAWITZ.

Jusqu'à présent, on n'a trouvé practiquement aucun débouché pour ces scories d'aciéries et on se contente de les stocker en terrils.

Le brevet allemand DE—B—2040484 (HUETTENWERK OBERHAUSEN) propose la fabrication d'un liant hydraulique composé de 60 à 40% en poids de laitier granulé de haut fourneau, et de 40 à 60% en poids de scoriès d'aciérie, broyés ensemble à la finesse de 3.500 à 4.500 $cm^2/g$, et additionnés de 5 à 10% en poids de gypse ou d'anhydrite. Ce liant, qui rappelle les ciments sursulfatés, sert à la fabrication d'éléments de construction, qui doivent être étuvés ou autoclavés.

L'invention a pour but de procurer un procédé de préparation d'un liant hydraulique binaire, composé de scories d'aciérie et de sulfate de calcium, qui développe ses propriétés hydrauliques à la température ordinaire.

Une analyse de ces scories a permis de déterminer leur composition chimique qui est reprise, pour fixer les idées et à titre d'exemple, ci-après:

| | |
|---|---|
| CaO: | 40 à 48% dont 2 à 12% de CaO libre |
| MgO: | 3 à 6% |
| $SiO_2$: | 8 à 18% |
| $Al_2O_3$: | 0,3 à 2,0% |
| $Fe_2O_3$: | 21 à 35% Fe à diverses valences |
| MnO: | 4 à 6% |
| $P_2O_5$: | 1,5 à 2,5% (rarement 3 ou 4%) |
| $S^=$: | $<$0,2% |
| $F^-$: | 0,2 à 0,3% |

Les variations de composition résultent, d'une part, de la composition chimique des fontes et mitrailles traitées et, d'autre part, du degré d'affinage des fontes imposé.

Des études, pour la mise au point du procédé suivant l'invention et notamment par diffraction de rayons X, ont montré que ces scories renfermaient les principaux constituants minéralogiques suivants:

— le silicate bicalcique $2CaO.SiO_2$ de forme $\beta$, vraisemblablement stabilisé sous cette forme par la présence de FeO et $P_2O_5$;
— la wustite FeO, contenant probablement des oxydes MnO et MgO;
— le ferrite bicalcique $2CaO.Fe_2O_3$.

La somme de ces trois constituants dépasse 75% de la masse de la scorie, dans les proportions suivantes données à titre d'exemple:

$2CaO.SiO_2$: 38%  FeO: 30%  $2CaO.Fe_2O_3$: 14%

A ces trois constituants vient s'ajouter une quantité de chaux libre variable de l'ordre de 5%.

Ces études ont permis de déterminer que la scorie d'aciérie à l'oxygène finement broyée (par exemple à 5.000 $cm^2/g$ suivant BLAINE), peut donner avec de l'eau une pâte qui raidit après quelques minutes, avec dégagement de chaleur.

Des essais de mortiers obtenus par mélange de sable et de scorie pure broyée ont montré que ces mortiers ne développent pas de résistance au cours du temps; bien au contraire, les éprouvettes se fissurent après quelques jours.

De plus, des études d'orientation ont montré que la scorie d'aciérie à l'oxygène ne présentait pas de caractère hydraulique en présence de clinker de ciment portland.

Lors des études pour la mise au point du procédé suivant l'invention et en partant du fait que les scories d'aciérie finement broyées et mélangées à de l'eau forment une pâte qui raidit, on a pensé à stimuler l'activité hydraulique des scories en les mélangeant à du sulfate de calcium. Ce mélange de scories et de sulfate de calcium, broyés simultanément ou non, et gâché avec de l'eau, manifeste au cours du temps des phénomènes de prise et de durcissement analogues à ceux d'un liant hydraulique classique, tels les ciments portland ou métallurgiques. Suivant les proportions de scories et de sulfate,

et suivant leur composition chimique, on peut obtenir un temps de prise et un développement des résistances plus lent ou plus rapide.

L'hydraulicité des scories d'aciérie, en présence de sulfate de calcium, qui a été constatée lors des études susdites étant un phénomène nouveau et auquel on ne pouvait pas s'attendre, on ne peut, à l'heure actuelle, qu'émettre des hypothèses concernant le mécanisme d'hydratation des constituants principaux de ces scories.

Les réactions d'hydratation pourraient se dérouler comme suit:

$$2Ca_2SiO_4+4H_2O \rightarrow Ca_3Si_2O_7 . 3H_2O+Ca(OH)_2$$

réaction probablement activée par la présence de $CaSO_4$, comme dans le cas bien connu du silicate tricalcique.

$$Fe+H_2O \rightarrow Fe(OH)_2$$

$$2\ Fe(OH)_2+1/2\ O_2+H_2O \rightarrow 2Fe(OH)_3$$

$$2Fe(OH)_3+3Ca(OH)_2+3CaSO_4+(n-6)H_2O \rightarrow 3CaO . Fe_2O_3 . 3CaSO_4 . nH_2O$$

et enfin:

$$2CaO . Fe_2O_3+CaO+3CaSO_4+nH_2O \rightarrow 3CaO . Fe_2O_3 . 3CaSO_4 . nH_2O$$

Des essais ont par ailleurs montré qu'en cas d'utilisation d'un mélange de scories LD et d'anhydrite, cette anhydrite se transforme d'abord en gypse avant de donner lieu aux réactions énumérées ci-dessus.

Si l'activation de l'hydraulicité des scories d'aciérie à l'oxygène s'obtient en présence de sulfate de calcium, les essais réalisés ont motré que les chlorures de sodium et de calcium n'activent pratiquement pas l'hydraulicité de la scorie et, qu'en outre, les éprouvettes contenant des chlorures se fissurent complètement au bout de quelques jours.

La mise au point du procédé suivant l'invention permettant d'obtenir un liant hydraulique par simple mouture et mélange de scories d'aciérie à l'oxygène et de sulfate de calcium est particulièrement intéressante au point de vue économique étant donné que des quantités énormes de scories et de gypse résiduaire (sous-produit de la fabrication d'acide phosphorique par exemple) s'accumulent en terrils, sans trouver d'utilisation.

A titre d'exemple, le nouveau liant hydraulique obtenu par le procédé suivant l'invention peut être avantageusement utilisé dans les fondations de routes (béton maigre et empierrement stabilisé) et dans le sable stabilisé.

A titre d'exemple, sont donnés ci-après quelques résultats d'essais sur pâtes et mortiers préparés à base du liant obtenu, par le procédé suivant l'invention, par mélange de scories d'aciérie à l'oxygène et de gypse.

Exemple n° 1

On a préparé en laboratoire un mélange intime de 544 g de scorie broyée à la finesse de 5.200 $cm^2/g$ (Blaine), avec respectivement 54,4 et 109 g de gypse naturel; à l'aide de ces mélanges et de sable normalisé, on a confectionné des éprouvettes RILEM qui ont été cassées en compression à différents âges. Les résultats sont donnés ci-après, comparés aux résultats obtenus sur un échantillon témoin de scorie broyée sans sulfate de calcium.

| Scories 5.200 $cm^2/g$ | Résistance à la compression en $N/mm^2$ 2 jours | 3 j. | 7 j. | 14 j. | 21 j. | 28 j. |
|---|---|---|---|---|---|---|
| sans sulfate | 0,4 | 0,4 | 0,4 | * | * | * |
| 9% en poids de gypse | 0,5 | 0,6 | 1,4 | 2,8 | 3,2 | 3,7 |
| 17% en poids de gypse | 0,8 | 1,1 | 2,3 | 3,7 | 5,5 | 6,2 |

* éprouvette fissurée.

Exemple n° 2

On a préparé en laboratoire un mélange intime de 2.000 g de scorie broyée, de dimension 0—1 mm, et respectivement 600 g de gypse naturel et 600 g de gypse résiduaire de la fabrication d'acide phosphorique. Des éprouvettes (sans sable supplémentaire) de dimensions 4×4×16 cm ont été moulées à l'aide de ces mélanges, et essayées en compression à différents âges; les résultats de ces essais sont donnés ci-après:

| Scorie 0—1 mm | Résistance à la compression en N/mm² 2 jours | 3 j. | 7 j. | 14 j. | 21 j. | 28 j. |
|---|---|---|---|---|---|---|
| 23% en poids de gypse naturel | 1,7 | 2,3 | 3,8 | 5,5 | 6,6 | 7,5 |
| 23% en poids de gypse résiduaire | 1,1 | 1,5 | 2,8 | 4,6 | 6,1 | 6,8 |

Exemple n° 3

On a préparé en laboratoire les mélanges suivants:

| | Scorie 0—1 mm | Gypse résiduaire |
|---|---|---|
| Mélange 23% en poids | 1.800 g | 540 g |
| Mélange 33% en poids | 1.600 g | 800 g |

Ces mélanges, moulés en éprouvettes 4×4×16 cm, donnent après étuvage de 5h à 75°C les résistances en compression suivantes:

mélange à 23% en poids de gypse: 3,3 N/mm²
mélange à 33% en poids de gypse: 3,3 N/mm²

Lorsque l'on mélange du sulfate de calcium anhydre (anhydrite) aux scories d'aciérie à l'oxygène, les réactions d'hydration sont analogues à celles précisées ci-dessus du fait que cette anhydrite se transforme en gypse pour donner alors lieu auxdites réactions. Les résultats d'essai sur pâtes et mortiers, préparés à base de gypse et mentionnés ci-avant, sont également valables pour des pâtes et mortiers préparés à base d'anhydrite et de scories d'aciérie à l'oxygène.

**Revendications**

1. Procédé de préparation de liant hydraulique, caractérisé en ce qu'il consiste à broyer des scories d'aciérie à l'oxygène et à les mélanger à du sulfate de calcium, la teneur de sulfate de calcium dans ce mélange à deux constituants étant comprise entre 2 et 50% en poids.
2. Procédé suivant la revendication 1, caractérisé en ce que le sulfate de calcium mélangé aux scories est anhydre.
3. Procédé suivant la revendication 1, caractérisé en ce que le sulfate de calcium mélangé aux scories est hydraté.

**Patentansprüche**

1. Verfahren zur Herstellung eines hydraulischen Bindemittels, dadurch gekennzeichnet, daß Sauerstoff-Blasstahlwerk-Schlacken zerkleinert werden und mit Calciumsulfat gemischt werden, wobei der Calciumsulfat-Anteil in diesem Gemisch zweier Bestandteile zwischen 2 und 5o Gew.-% liegt.
2. Verfahren nach Anspruch 1, dadurch gekennzeichnet, daß das den Schlacken zugemischte Calciumsulfat wasserfrei ist.
3. Verfahren nach Anspruch 1, dadurch gekennzeichnet, daß das den Schlacken zugemischte Calciumsulfat wasserhaltig ist.

**Claims**

1. A process for preparing a hydraulic binder, characterized in that it comprises grinding oxygen steel mill slags and mixing them with calcium sulfate, the calcium sulfate content in said mixture with two components being comprised between 2 and 50% by weight.
2. A process according to claim 1, characterized in that the calcium sulfate mixed with the slags is anhydrous.
3. A process according to claim 1, characterized in that the calcium sulfate mixed with the slags is hydrated.